Europäisches Patentamt

European Patent Office

Office européen des brevets

(11) Veröffentlichungsnummer: **0 309 726 B1**

# EUROPÄISCHE PATENTSCHRIFT

(45) Veröffentlichungstag der Patentschrift: **28.10.92**

(51) Int. Cl.⁵: **H04N 9/64**

(21) Anmeldenummer: **88113595.8**

(22) Anmeldetag: **22.08.88**

(54) **Verfahren zur Einblendung von Prüfzeilen.**

(30) Priorität: **30.09.87 DE 3732866**

(43) Veröffentlichungstag der Anmeldung:
**05.04.89 Patentblatt 89/14**

(45) Bekanntmachung des Hinweises auf die
Patenterteilung:
**28.10.92 Patentblatt 92/44**

(84) Benannte Vertragsstaaten:
**AT BE CH DE ES FR GB GR IT LI LU NL SE**

(56) Entgegenhaltungen:
**EP-A- 0 093 904**
**US-A- 4 200 882**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Meunier, Thierry**
**Oskar-Joos-Strasse 10**
**W-7730 VS-Obereschach(DE)**

EP 0 309 726 B1

## Beschreibung

Die Erfindung betrifft ein Verfahren zur Einblendung von Prüfzeilen zur automatischen Einstellung der Katodenströme in einer Bildröhre. Solch ein Verfahren ist an sich bekannt aus EP-A-0 093 904 (veröffenlicht am 16.11.83)

Derartige Prüfzeilen werden, für den Betrachter unsichtbar, während der ersten Zeilen des Bildhinlaufs eingeblendet. Mit diesen Prüfzeilen werden Pegel vorgegeben, mit denen der Schwarzwert und der Weißwert und die Leckströme automatisch kontrolliert werden. Bei einem Farbfernsehempfänger mit seinen drei Strahlsystemen für Rot, Grün und Blau ist je eine Prüfzeile für die einzublendenden Pegel notwendig. Da diese Prüfzeilen im nichtsichtbaren Bildhinlauf eingeblendet werden, stören sie im Normalfall auch nicht. Es macht sich jedoch ein störender Echo-Effekt am oberen Bildrand bemerkbar, wenn die Bildhelligkeit dort sehr gering ist. Sobald das Bildformat von derzeit im Verhältnis 4 : 3 aus welchem Grund auch immer auf ein Verhältnis von z.B. 16 : 9 , d.h. mit reduzierter Vertikalablenkamplitude wiedergegeben wird, ist die bekannte Methode der Prüfzeileneinblendung nicht mehr möglich, da dann diese Zeilen sichtbar werden und stören können.

Der Erfindung liegt die Aufgabe zugrunde, trotz reduzierter Vertikalablenkamplitude die Einblendung von Prüfzeilen am oberen Rand des wiedergegebenen Bildes zu ermöglichen, ohne daß diese sichtbar werden. Diese Aufgabe wird durch die im Patentanspruch angegebene Erfindung gelöst.

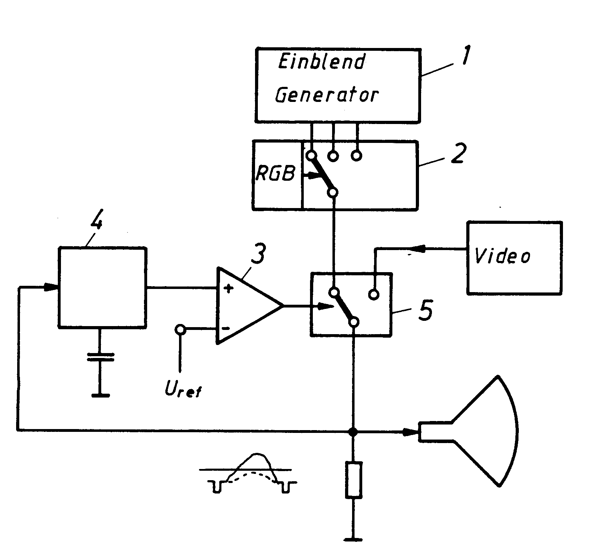

Nachfolgend wird die Erfindung mit Hilfe der Zeichnung erläutert.

Ein Einblendgenerator 1 erzeugt die Pegel für "cut-off"-,"drive"- und Leckstrom. Ein Zähler 2 schaltet diese Pegel zyklisch zur Einblendung durch. Die zyklische Weiterschaltung geschieht von Halbbild zu Halbbild. Bei einer Dreistrahl-Farbbildröhre gelangt jeder Pegel für die Farben Rot, Grün und Blau nach jeweils sechs Halbbildern an die Bildröhre. Diese Einblendung geschieht aber in Abhängigkeit von einem Mindestpegel des Leuchtdichtesignals des wiederzugebenden Bildes. Hierzu wird ein in der Schaltung 4 zur Messung des mittleren Strahlstromes festgestellter Pegel in einem Komparator 3 mit einem Referenzpegel verglichen. Überschreitet der Wert diesen Pegel, betätigt der Komparator 3 einen Umschalter 5 zur Einblendung der Prüfzeile . Unterschreitet der Bildinhalt den vorgegebenen Pegel einer Mindest-Leuchtdichte, wird der Umschalter 5 auf den Videoausgang des Videoverstärkers geschaltet, so daß dann keine Einblendung erfolgen kann, sondern stattdessen der Bildinhalt der für die Einblendung vorgesehenen Zeile wiedergegeben wird.

Die Erfindung besitzt nachstehende Vorteile:

Durch die zeitliche Trennung der verschiedenen Einblendungen mit dazwischen liegenden Halbbildern sowie durch die räumliche Trennung, indem nur eine einzige Zeile statt einer Gruppe von Zeilen eingeblendet wird, wird die Auswirkung dieser Zeilen auf das wiedergegeben Bild stark vermindert. Es besteht dadurch auch kein Risiko von Echostörungen am oberen Bildrand mehr. Es ist auch keine besondere Zeile mehr für die Einblendung vorzusehen. Die Prüfzeile wird nicht mehr sichtbar, da die Einblendung nicht stattfindet, wenn der Bildinhalt nicht selbst eine genügend große Leuchtdichte besitzt. Die eingeblendete Zeile vermischt sich mit dem Rest des Bildes.

## Patentansprüche

1. Verfahren zur Einblendung von Prüfzeilen zur automatischen Einstellung der Katodenströme in einer Bildröhre, dadurch gekennzeichnet , daß die Prüfzeilen während des sichtbaren Bildhinlaufs jeweils in die erste Zeile aufeinanderfolgender Halbbilder nacheinander eingeblendet werden.

2. Verfahren nach Anspruch 1, dadurch gekennzeichnet, daß die Prüfzeilen in Abhängigkeit von einem vorgebbaren Mindestwert des mittleren Strahlstromes in der Bildröhre eingeblendet werden.

## Claims

1. Method for the fading-in of test lines for the automatic adjustment of the cathode currents in a picture tube, characterised in that, the test lines are faded-in during the visible part of a frame, each time, in the first line of successive frames one after the other.

2. Method in accordance with claim 1, characterised in that, the test lines are faded-in in dependence on a predetermined minimum value of the average beam current in the picture tube.

## Revendications

1. Procédé pour la surimpression de lignes d'essai pour le réglage automatique des courants cathodiques dans un tube image, **caractérisé en ce** que les lignes d'essai sont surimprimées l'une après l'autre pendant l'aller image visible respectivement dans la première ligne de trames successives.

2. Procédé selon la revendication 1, **caractérisé en ce** que les lignes d'essai sont surimprimées en fonction d'une valeur minimum qui peut être prédéterminée du courant de faisceau moyen dans le tube image.